# FASCICULE DE BREVET EUROPEEN

(11) **EP 3 521 589 B1**
(45) Date de publication et mention de la délivrance du brevet: **20.04.2022**
(21) Numéro de dépôt: 19153789.3
(22) Date de dépôt: 25.01.2019
(51) Int. Cl.: F02C 6/08, B64D 13/06, B64D 33/10, F02C 7/14, F02C 7/18

(54) **SYSTÈME DE REFROIDISSEMENT D'AIR MOTEUR À DEUX ÉTAGES DE REFROIDISSEMENT ET PROCÉDÉ CORRESPONDANT**
ZWEISTUFIGES MOTORLUFTKÜHLUNGSSYSTEM UND ENTSPRECHENDES VERFAHREN
SYSTEM FOR COOLING ENGINE AIR WITH TWO COOLING STAGES AND CORRESPONDING METHOD

(30) Priorité: 02.02.2018 FR 1850891
(43) Date de publication de la demande: 07.08.2019
(73) Titulaire: Liebherr-Aerospace Toulouse SAS, 31200 Toulouse (FR)
(72) Inventeur: HARTENSTEIN, Laurent, 31016 TOULOUSE Cedex 2 (FR); POUYLLAU, Thomas, 31016 TOULOUSE Cedex 2 (FR); DESCAMPS, François, 31016 TOULOUSE Cedex 2 (FR)
(74) Mandataire: Bringer, Mathieu

(56) Documents cités:
- WO-A1-2016/004023
- FR-A1- 2 806 405
- US-A- 3 177 679
- US-A1- 2007 266 695
- US-B1- 6 457 318
- US-B2- 8 342 443

## Description

### 1. Domaine technique de l'invention

L'invention concerne un système de refroidissement d'un air haute pression prélevé sur un moteur d'un aéronef. L'invention concerne également un procédé de refroidissement d'un air haute pression prélevé sur un moteur d'aéronef.

### 2. Arrière-plan technologique

Il est connu que les aéronefs comprennent des moyens de prélèvement d'un air haute pression, notamment sur les moteurs propulsifs de l'aéronef, qui permettent de fournir cet air haute pression, plus connu sous la dénomination anglaise d'air *bleed,* à un système d'air. La dénomination anglaise d'air bleed est adoptée dans tout le texte qui suit.

Ce système d'air a pour fonction de fournir un air à pression et/ou température contrôlées à au moins un équipement ayant un besoin d'un tel air conditionné au cours d'au moins une des phases de vol de l'aéronef.

Un tel équipement est par exemple un système de contrôle environnemental d'une cabine d'un aéronef, plus connu sous l'acronyme ECS pour la dénomination anglaise « Environnemental Control System » qui est destiné à fournir à la cabine d'aéronef (qui désigne de manière générale tout espace intérieur de l'aéronef dont la pression et/ou la température doit être contrôlée, tel qu'une cabine pour passagers, le cockpit de pilotage, une soute, etc.) un air à pression et/ou température contrôlées.

Un tel équipement peut également être un dispositif de protection contre le givrage de la voilure, plus connu sous l'acronyme anglais WIPS pour *Wing Ice Protection System,* ou un dispositif d'alimentation en air d'un système d'inertage des réservoirs d'essence.

L'air bleed est en général prélevé soit depuis un moteur propulsif d'un aéronef, soit depuis un groupe auxiliaire de puissance, plus connu sous la dénomination anglaise APU, pour *Auxiliary Power Unit,* voire depuis un système haute-pression embarqué sur un chariot au sol pour les manœuvres au sol de l'aéronef.

Un air *bleed* est donc, au sens de l'invention, un air qui provient directement du dispositif de prélèvement d'air, c'est-à-dire en général d'un compresseur d'un moteur propulsif de l'aéronef ou d'un compresseur d'une unité auxiliaire de puissance. Cet air *bleed* est donc un air qui provient directement de ce dispositif de prélèvement avant tout traitement par la turbomachine à cycle à air d'un système de conditionnement d'air.

Il est connu que cet air bleed prélevé sur les moteurs de l'aéronef est refroidi par un échangeur thermique air/air, plus connu sous la terminologie anglaise de *precooler,* qui est adoptée dans tout le texte qui suit.

Ce precooler comprend en général un circuit chaud et un circuit froid transverse, configurés pour pouvoir assurer des échanges thermiques entre le flux d'air bleed véhiculé par le circuit chaud (aussi désigné ci-après par la passe chaude ou passe primaire) et le flux d'air froid véhiculé par le circuit froid (aussi désigné ci-après par la passe froide ou passe secondaire).

Le circuit froid est en général alimenté par un flux d'air prélevé sur l'écoulement secondaire du moteur, connu sous la dénomination de fan air, dont la température est proche de l'environnement extérieur de l'aéronef, et qui peut donc atteindre en vol des températures de l'ordre de -50°C et une pression de l'ordre de 600 mbar.

La passe froide est équipée d'une vanne de régulation qui permet de contrôler le débit d'air froid de manière à pouvoir piloter la température de sortie de la passe chaude en fonction de la température de l'air bleed prélevé sur le moteur qui dépend du régime de fonctionnement du moteur.

En général, le pilotage de precooler permet de fournir un air en sortie du circuit chaud qui présente une température comprise entre 200°C et 250°C pour un air en entrée qui peut atteindre des températures de l'ordre de 600°C et une pression de l'ordre de 40 bars.

Ce precooler est agencé dans l'environnement moteur et subit donc des contraintes vibratoires, thermiques et mécaniques importantes.

Le volume de l'échangeur thermique est dicté par les besoins en puissance d'échange thermique et les caractéristiques des sources et conduites d'alimentation en air chaud et en air froid.

Les différentiels de pression et de température entre les passes chaude et froide imposent en outre l'utilisation de matériaux présentant des caractéristiques mécaniques compatibles avec les hautes températures mentionnées précédemment, tels que l'acier.

Les précoolers sont donc des organes indispensables, lourds et encombrants, ce qui impacte significativement les performances énergétiques de l'aéronef.

Il existe donc un besoin de disposer d'une solution nouvelle permettant de refroidir l'air haute-pression prélevé sur les moteurs d'un aéronef, en particulier sur les moteurs propulsifs, tout en limitant au maximum l'encombrement et le poids d'un tel système de refroidissement.

Les documents US2007/266695 A1, US6457318 B1 et US3177679 A divulguent des systèmes connus de l'art antérieur.

### 3. Objectifs de l'invention

L'invention vise à fournir un système de refroidissement d'air bleed qui pallie au moins certains des inconvénients des solutions connues.

L'invention vise en particulier à fournir, dans au moins un mode de réalisation, un système de refroidissement d'air bleed qui présente un encombrement réduit par rapport aux solutions antérieures.

L'invention vise aussi à fournir, dans au moins un mode de réalisation, un système de refroidissement d'air bleed qui permet de réduire le prélèvement d'air frais sur l'étage fan du moteur.

L'invention vise aussi à fournir, dans au moins un mode de réalisation, un système de refroidissement d'air bleed qui puisse s'adapter à différentes architectures, en particulier dans des environnements exigus et complexes.

L'invention vise aussi à fournir un procédé de refroidissement d'air bleed qui peut être mis en œuvre par un système selon l'invention.

L'invention vise aussi à fournir un aéronef équipé d'un système de refroidissement selon l'invention.

### 4. Exposé de l'invention

Pour ce faire, l'invention concerne un système de refroidissement d'air, dit air bleed, prélevé sur un moteur d'un aéronef pour alimenter en air à température contrôlée un premier et un deuxième équipements.

Un système selon l'invention est caractérisé en ce qu'il comprend :
- un premier échangeur thermique de refroidissement air/air adapté pour être agencé dans une première zone de l'aéronef (par exemple la zone moteur), ledit premier échangeur comprenant un circuit primaire adapté pour être alimenté par ledit air bleed, et un circuit secondaire, adapté pour être alimenté par une première source d'air froid, lesdits circuits étant configurés pour pouvoir assurer des échanges thermiques entre le flux d'air du circuit primaire et le flux d'air du circuit secondaire, de manière à former un premier étage de refroidissement de l'air bleed prélevé sur le moteur,
- un deuxième échangeur thermique de refroidissement d'air adapté pour être agencé dans une deuxième zone de l'aéronef (par exemple dans la zone pylône), ledit deuxième échangeur comprenant un circuit primaire adapté pour être alimenté par l'air issu du circuit primaire dudit premier étage de refroidissement, et un circuit secondaire, adapté pour être alimenté par une source de fluide froid, indépendante de ladite première source d'air froid, lesdits circuits étant configurés pour pouvoir assurer des échanges thermiques entre le flux d'air du circuit primaire et le flux de fluide du circuit secondaire, de manière à former un deuxième étage de refroidissement de l'air bleed prélevé sur le moteur, ledit flux d'air en sortie de ce deuxième étage de refroidissement alimentant ledit deuxième équipement,
- une conduite de contournement, dite conduite de by-pass s'étendant entre un nœud agencé entre le premier échangeur thermique et le deuxième échangeur thermique et ledit deuxième équipement, ladite conduite étant équipée d'un moyen de contrôle du débit d'air circulant dans ladite conduite de by-pass de manière à pouvoir, sur commande, alimenter directement en air refroidi par ledit premier étage de refroidissement ledit deuxième équipement, sans passer par ledit deuxième étage de refroidissement,

- une conduite de dérivation s'étendant entre un nœud agencé entre le premier échangeur thermique et le deuxième échangeur thermique et ledit premier équipement, ladite conduite étant équipée d'un moyen de contrôle du débit d'air circulant dans ladite conduite de dérivation de manière à pouvoir, sur commande, alimenter en air refroidi par ledit premier étage de refroidissement ledit premier équipement,
- une unité de commande configurée pour pouvoir commander ledit moyen de régulation du débit d'air circulant dans ladite conduite de by-pass et ledit moyen de régulation du débit d'air circulant dans ladite conduite de dérivation de sorte que le système présente au moins les modes de fonctionnement suivants :
   o un mode de fonctionnement, dit normal, dans lequel ledit premier équipement et ledit deuxième équipement sont chacun alimentés par l'air refroidi uniquement par ledit premier étage de refroidissement,
   o un mode de fonctionnement, dit de secours, dans lequel ledit premier équipement est alimenté en air bleed refroidi par ledit premier étage de refroidissement et ledit deuxième équipement est alimenté en air bleed refroidi à la fois par ledit premier étage de refroidissement et par ledit deuxième étage de refroidissement,
   o un mode de fonctionnement, dit d'urgence, dans lequel ledit premier équipement n'est pas alimenté en air bleed et ledit deuxième équipement est alimenté en air bleed refroidi à la fois par ledit premier étage de refroidissement et par ledit deuxième étage de refroidissement.

Un système de refroidissement d'un air bleed selon l'invention comprend donc deux échangeurs thermiques de refroidissement d'air, aussi désignés ci-après par le terme anglais de *precooler,* agencés respectivement dans une première et une deuxième zone de l'aéronef. Dans le cas d'un refroidissement d'un air bleed prélevé sur un moteur propulsif de l'aéronef, le precooler du premier étage de refroidissement est par exemple logé dans la nacelle du moteur propulsif (qui forme alors la première zone de l'aéronef au sens de l'invention) et le precooler du deuxième étage de refroidissement est par exemple logé dans le pylône (ou mat) du moteur de l'aéronef (qui forme alors la deuxième zone de l'aéronef au sens de l'invention), qui relie le moteur à la voilure ou au fuselage de l'aéronef. Le precooler du deuxième étage peut également être avantageusement logé dans le ventre mou de l'aéronef ou au sein d'une baie non pressurisée du fuselage de l'aéronef.

Selon certains modes de réalisation (qui dépendent des caractéristiques de l'aéronef), ladite première zone de l'aéronef est formée par la combinaison d'une zone moteur (ou nacelle) de l'aéronef et de la zone pylône de ce moteur de sorte que le premier échangeur thermique peut, dans ces modes de réalisation, s'étendre à cheval sur les zones moteur et pylône.

Selon certains modes de réalisation, les première et deuxième zones peuvent également être formées par une même zone de l'aéronef, par exemple la zone pylône du moteur de l'aéronef, qui loge alors à la fois le premier échangeur thermique et le deuxième échangeur thermique d'un système selon l'invention.

Selon d'autres modes de réalisation, les première et deuxième zones sont des zones distinctes de l'aéronef.

Le système selon l'invention comprend donc deux précoolers agencés en série sur la passe chaude du système d'air, ce qui permet de réduire l'encombrement et le poids du precooler du premier étage de refroidissement, et facilite son intégration dans ladite première zone de l'aéronef, qui est par exemple la zone moteur. Le complément de refroidissement est assuré par le précooler du deuxième étage qui peut être déporté dans une zone moins critique en termes de volume ou de poids, par exemple la zone pylône.

En outre, chaque étage de refroidissement est alimenté par une source d'air ou de fluide froid indépendante.

Avantageusement et selon l'invention, la première source d'air froid est formée par un air prélevé sur un écoulement secondaire du moteur, dit air fan.

La source de fluide froid du deuxième étage peut être une source d'air, une source liquide ou une source de gaz réfrigérant.

Cela étant, avantageusement et selon l'invention, la deuxième source de fluide froid est formée par un air à la pression dynamique, dit air RAM, prélevé depuis une prise d'air extérieure.

Un système l'invention permet de limiter le prélèvement d'air froid sur l'écoulement secondaire du moteur. En particulier, le prélèvement sur l'écoulement secondaire du moteur est limité au premier étage de refroidissement. Le précooler du deuxième étage de refroidissement est avantageusement agencé au voisinage d'une prise d'air dynamique qui fait office de deuxième source d'air froid.

Un système selon l'invention permet en outre d'alimenter, selon les phases de vol de l'aéronef et en fonction des commandes appliquées aux moyens de contrôle de débit d'air de la conduite de by-pass et de la conduite de dérivation, les équipements suivants :
- le premier équipement directement avec de l'air refroidi uniquement par le premier étage de refroidissement (par le biais de la conduite de dérivation)
- le deuxième équipement directement avec de l'air refroidi uniquement par le premier étage de refroidissement (par le biais de la conduite de by-pass)
- le deuxième équipement par un air refroidi à la fois par le premier étage et le deuxième étage de refroidissement.

Un système selon l'invention peut donc être commandé (par le biais des moyens de contrôle des débits d'air de la conduite de by-pass et de la conduite de dérivation) pour qu'en fonctionnement normal, le deuxième étage de refroidissement ne soit pas utilisé, de sorte que le premier et le deuxième équipements sont chacun alimentés par l'air refroidi uniquement par le premier étage de refroidissement et fonctionnent donc chacun à la même température.

En cas de panne, les équipements peuvent solliciter un surplus de débit d'air qui ne permet pas de maintenir la même température en sortie du premier étage de refroidissement. Avantageusement, le premier équipement est dimensionné pour être compatible avec un fonctionnement à cette température plus élevée en cas de panne. En cas de panne, le deuxième étage de refroidissement est alors activé pour pouvoir fournir le complément de refroidissement permettant de fournir au deuxième équipement un air à la même température qu'en fonctionnement normal du système. Le premier équipement est alimenté par l'air fourni par le premier étage de refroidissement étant donné qu'il a été dimensionné pour pouvoir fonctionner à ce niveau de température.

Le système peut également être commandé de sorte qu'en cas de panne, un refroidissement supplémentaire est fourni au deuxième équipement par le biais d'une désactivation du premier équipement de sorte que le premier étage de refroidissement et le deuxième étage de refroidissement alimentent chacun le deuxième équipement en air. Cette configuration peut par exemple être utilisée dans une phase de transition ou une phase de fin de vol.

La température de l'air peut être régulée en série sur la passe froide ou en dérivation sur la passe chaude.

Dans tout le texte, la terminologie « unité de commande » des moyens de régulation du débit d'air circulant dans la conduite de by-pass et dans la conduite de dérivation s'entend de moyens de commande. En particulier, ces moyens de commande peuvent être intégrés au sein d'une seule et même entité de commande, mais peuvent également être formés d'une pluralité d'entités disjointes formant ensemble ladite unité de commande.

Avantageusement et selon l'invention, le premier échangeur thermique est un échangeur cylindrique de refroidissement air/air enchâssé dans une conduite cylindrique de circulation d'air bleed adaptée pour relier ledit moteur et au moins un équipement.

Un premier échangeur thermique cylindrique (aussi qualifié de tubulaire) permet son logement dans une conduite cylindrique préexistante, ce qui limite très fortement l'espace utilisé par un tel échangeur thermique (par exemple dans le cadre d'un agencement du premier échangeur dans l'environnement moteur). En effet, la conduite de circulation d'air bleed reliant le moteur et un équipement est nécessaire dans tous les systèmes. L'invention tire donc profit de cette conduite préexistante pour y loger le premier échangeur thermique. En d'autres termes, l'invention prévoit de fonctionnaliser une conduite de circulation d'air bleed en y logeant le premier échangeur thermique et en conférant ainsi à cette conduite une fonctionnalité supplémentaire de premier étage de refroidissement.

Un échangeur thermique d'un système selon l'invention peut être fabriqué en « Inconel^{®} » ou en Carbure de Silicium (ou Silicone Carbide).

Un échangeur en Carbure de Silicium permet de réduire le poids de l'échangeur et participe donc à la réduction de la consommation énergétique de l'aéronef équipé d'un système selon cette variante.

Un système selon l'invention peut alimenter en air tout type d'équipements nécessitant un air à pression et température contrôlées.

Avantageusement et selon l'invention, le premier équipement est un dispositif de protection contre le givrage de la voilure, plus connu sous l'acronyme anglais WIPS pour *Wing Ice Protection System,* ou un dispositif d'alimentation en air d'un système d'inertage des réservoirs d'essence.

Avantageusement et selon l'invention, ledit deuxième équipement est un pack de conditionnement d'air d'un système de contrôle environnemental d'une cabine de l'aéronef.

L'invention concerne également un aéronef comprenant au moins un moteur propulsif et au moins deux équipements adaptés pour être alimentés en air à température contrôlée.

Un aéronef selon l'invention est caractérisé en ce qu'il comprend en outre au moins un système de refroidissement d'air prélevé sur ledit moteur propulsif selon l'invention.

Les avantages d'un système selon l'invention s'appliquent *mutatis mutandis* à un aéronef selon l'invention.

L'invention concerne également un procédé de refroidissement d'un air, dit air bleed, prélevé sur un moteur d'un aéronef pour alimenter en air à température contrôlée un premier et un deuxième équipements.

Le procédé selon l'invention est caractérisé en ce qu'il comprend :
- une première étape de refroidissement de l'air bleed par un premier échangeur thermique de refroidissement air/air agencé dans une première zone d'un aéronef (par exemple la zone moteur), au moyen d'une première source d'air froid,
- une deuxième étape de refroidissement de l'air bleed en sortie du premier échangeur thermique par un deuxième échangeur thermique de refroidissement air/air agencé dans une deuxième zone de l'aéronef (par exemple en zone pylône), au moyen d'une deuxième source de fluide froid, indépendante de ladite première source d'air froid, ledit flux d'air en sortie de ce deuxième échangeur thermique alimentant ledit deuxième équipement,

- une étape de commande d'un mode de fonctionnement choisi parmi:
   o un mode de fonctionnement, dit normal, dans lequel ledit premier équipement et ledit deuxième équipement sont chacun alimentés par l'air refroidi uniquement par ledit premier étage de refroidissement,
   o un mode de fonctionnement, dit de secours, dans lequel ledit premier équipement est alimenté en air bleed refroidi par ledit premier étage de refroidissement et ledit deuxième équipement est alimenté en air bleed refroidi à la fois par ledit premier étage de refroidissement et par ledit deuxième étage de refroidissement,
   o un mode de fonctionnement, dit d'urgence, dans lequel ledit premier équipement n'est pas alimenté en air bleed et ledit deuxième équipement est alimenté en air bleed refroidi à la fois par ledit premier étage de refroidissement et par ledit deuxième étage de refroidissement.

Un procédé selon l'invention est avantageusement mis en œuvre par un système selon l'invention et un système selon l'invention met avantageusement en œuvre un procédé selon l'invention.

L'invention concerne également un système et un procédé de refroidissement caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un système selon un mode de réalisation de l'invention mettant en œuvre un procédé selon un mode de réalisation de l'invention,
- la figure 2 est une vue schématique d'un échangeur thermique d'un système de refroidissement selon un mode de réalisation de l'invention,
- la figure 3 est une vue schématique plus détaillée du système de la figure 1,
- la figure 4 est une vue schématique d'un aéronef selon un mode de réalisation de l'invention équipé d'un système de refroidissement selon un mode de réalisation de l'invention.

### 6. Description détaillée d'un mode de réalisation de l'invention

Sur les figures, les échelles et les proportions ne sont pas strictement respectées et ce, à des fins d'illustration et de clarté.

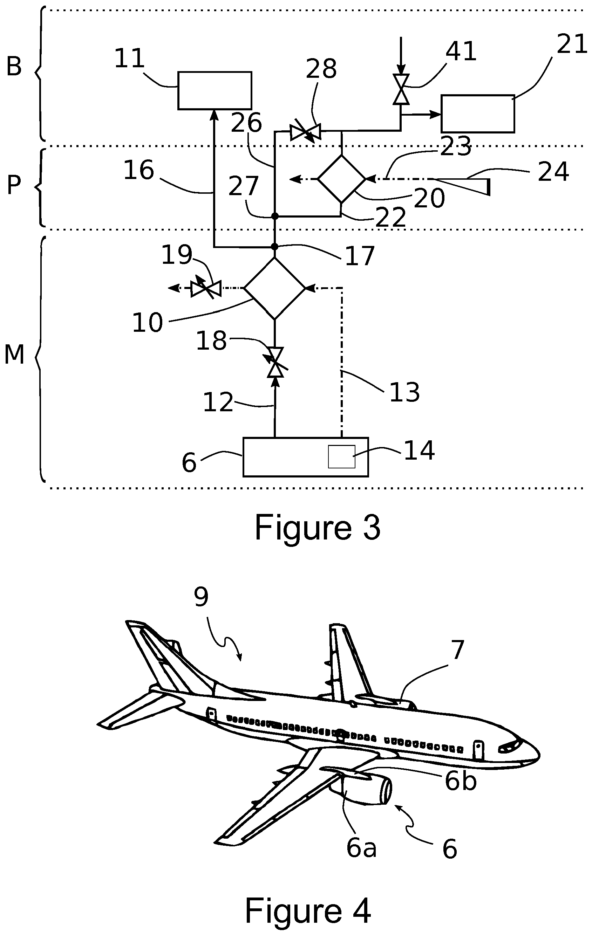

Un aéronef 9 selon l'invention comprend, tel que représenté schématiquement sur la figure 4, des moteurs principaux 6, 7 dédiés à la propulsion de l'aéronef comprenant chacun un compresseur et une turbine non représentés sur la figure.

L'aéronef comprend en outre au moins un système de refroidissement de l'air bleed prélevé sur le compresseur d'un moteur principal destiné à alimenter en air à température contrôlée des équipements 11, 21.

Ces équipements 11, 21 peuvent être de tous types.

Par exemple, et tel que représenté sur la figure 3, l'équipement 11 est un dispositif de protection contre le givrage de la voilure, plus connu sous l'acronyme anglais WIPS pour *Wing Ice Protection System* et l'équipement 21 est un pack de conditionnement (ou système de contrôle environnemental d'une cabine de l'aéronef plus connu sous l'acronyme ECS pour la dénomination anglaise *Environnemental Control System).* Un tel pack ECS est configuré pour conditionner l'air fourni par le système de refroidissement d'air bleed selon l'invention. Un tel système comprend de manière connue au moins un échangeur thermique air/air, connu sous l'acronyme anglais PHX pour *Primary Heat Exchanger,* qui a pour objectif de refroidir l'air en entrée de pack ECS (qui est le flux d'air en sortie du deuxième étage de refroidissement dans le cadre de l'invention). Le pack ECS 21 comprend également une turbomachine à cycle à air (plus connue sous l'acronyme anglais ACM *pour Air Cycle Machine)* comprenant au moins un compresseur qui a pour fonction de comprimer l'air en sortie de l'échangeur PHX. Le pack ECS comprend également un deuxième échangeur thermique air/air, plus connu sous l'acronyme anglais MHX pour *Main Heat Exchanger* qui a pour objectif de refroidir l'air en sortie de compresseur. Les circuits d'air froid des échangeurs PHX et MHX sont en général formés par un air à pression dynamique prélevé à l'extérieur. Le pack ECS comprend également une boucle d'extraction d'eau destinée à déshumidifier l'air avant son injection dans la turbine de la turbomachine à cycle à air ACM pour être détendu et distribué vers une chambre de mélange reliée à la cabine.

En d'autres termes, un système selon l'invention dont l'équipement 21 est un pack ECS comprend au moins trois échangeurs thermiques en série sur le circuit d'air bleed prélevé sur le moteur de l'aéronef en amont de la turbomachine à cycle à air : l'échangeur thermique 10 du premier étage de refroidissement, l'échangeur thermique 20 du deuxième étage de refroidissement et l'échangeur PHX en entrée du pack ECS.

Selon d'autres modes de réalisation, l'un des équipements alimentés en air par le système de refroidissement d'air selon l'invention peut être un dispositif d'alimentation en air d'un système d'inertage des réservoirs d'essence.

De préférence, l'aéronef comprend un système de refroidissement pour chaque moteur principal 6, 7 dédié à la propulsion.

Dans toute la suite, nous décrivons le système de refroidissement en lien avec le moteur propulsif 6, étant entendu que le système de refroidissement de l'air bleed prélevé sur l'autre moteur propulsif 7 peut présenter une architecture et un fonctionnement identique au système décrit en lien avec le moteur propulsif 6.

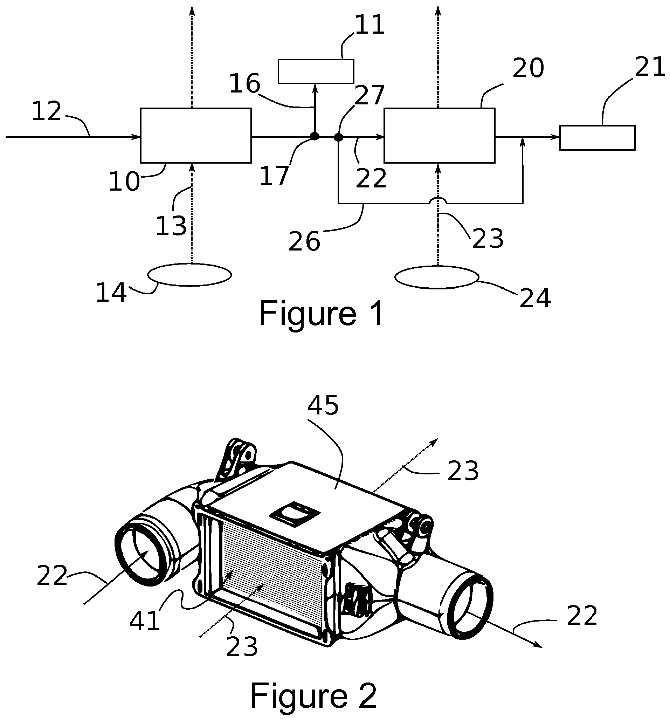

Le système de refroidissement de l'air bleed prélevé sur le moteur propulsif 6 comprend tel que représenté schématiquement sur les figures 1 et 3, deux échangeurs thermiques 10, 20, formant chacun un étage de refroidissement de l'air bleed prélevé sur le moteur de l'aéronef.

Sur les figures 1 et 3, les flèches en traits continus représentent les flux chauds primaires et les flèches en traits discontinus représentent les flux froids secondaires.

Le premier échangeur thermique 10, aussi désigné par le terme anglais de precooler du premier étage de refroidissement est agencé en zone moteur, par exemple dans la nacelle 10a du moteur, telle que représentée sur la figure 4. Le deuxième échangeur thermique 20, aussi désigné par le terme anglais de precooler, est agencé dans la zone du mat 6b du moteur propulsif. Selon d'autres modes de réalisation, le deuxième échangeur peut être agencé dans le ventre mou de l'aéronef ou dans une baie non pressurisée de l'aéronef.

Le premier échangeur thermique 10 comprend un circuit primaire 12 alimenté en air par l'air bleed prélevé sur le moteur 6 de l'aéronef et un circuit secondaire 13 alimenté en air par l'air fan 14 du moteur propulsif, qui forme la source d'air froid du premier étage de refroidissement.

De préférence, le circuit secondaire 12 est équipé d'une vanne 19 de régulation du débit d'air circulant dans le circuit secondaire, ce qui permet de réguler les échanges thermiques entre le circuit chaud 12 et le circuit froid 13, et donc de réguler la température du flux d'air du circuit chaud en sortie de l'échangeur thermique 10. En outre, le circuit primaire 12 est de préférence équipé d'une vanne de régulation 18 du flux d'air bleed adressé à l'échangeur thermique 10. Cette vanne de régulation 18 est de préférence à la fois une vanne de régulation et une vanne d'arrêt commandé, permettant d'isoler le moteur propulsif du système d'air en cas de besoin.

Le deuxième échangeur thermique 20 comprend également un circuit primaire 22 alimenté en air par l'air bleed refroidi par le premier échangeur thermique 10. En d'autres termes, l'entrée du deuxième échangeur thermique 20 est reliée à la sortie du premier échangeur thermique 10. L'échangeur thermique 20 comprend également un circuit secondaire 23 alimenté en air par un air prélevé sur une prise d'air à pression dynamique RAM 24.

Le deuxième échangeur comprend en outre de manière connue, et tel que représenté sur la figure 2, un carter 25 parallélépipédique dans lequel le circuit primaire 22 et le circuit secondaire 23 se croisent au niveau d'ailettes 41 métalliques logées dans le carter 25 et configurées pour permettre des échanges thermiques entre le flux d'air du circuit primaire 22 et le flux d'air du circuit secondaire 23 de manière à ce que le flux d'air secondaire 23, qui est un flux d'air froid, puisse refroidir le flux d'air primaire, qui est un flux d'air chaud (mais ayant déjà subi un premier refroidissement par le premier échangeur thermique 10 du système de refroidissement) issu du premier étage de refroidissement. Le flux d'air du circuit primaire alimente alors l'équipement 21.

L'échangeur thermique représenté sur la figure 2 présente une bouche d'entrée d'air du circuit primaire 22 qui est coudée pour faciliter l'installation de l'échangeur dans une zone encombrée. Selon d'autres modes de réalisation, cette bouche d'entrée peut être droite et colinéaire à la bouche de sortie.

L'échangeur thermique 10 peut présenter une architecture similaire à celle de l'échangeur thermique 20 tel que représenté sur la figure 2, mais peut également présenter une architecture et/ou une forme différente selon d'autres modes de réalisation. Quelle que soit l'architecture de l'échangeur thermique 10, le circuit primaire 12 et le circuit secondaire 13 sont configurés pour pouvoir assurer des échanges thermiques, au sein de l'échangeur thermique, entre le flux d'air du circuit primaire, qui est un flux d'air chaud bleed prélevé sur le moteur 6 propulsif, et le flux d'air du circuit secondaire, qui est un flux d'air froid prélevé sur l'écoulement secondaire du moteur propulsif 6, de manière à ce que le flux d'air secondaire 13, puisse refroidir le flux d'air primaire.

Les dimensions et capacités de refroidissement de chacun des échangeurs sont définies en fonction des caractéristiques et spécifications des équipements qu'ils alimentent.

Chaque échangeur de chaleur air/air permet un transfert de chaleur entre son circuit primaire et son circuit secondaire, selon la différence de température des flux d'air (ou de fluide) circulant respectivement dans chacun de ces deux circuits.

Le système de refroidissement comprend également de préférence une conduite de by-pass 26 s'étendant entre un nœud 27 agencé entre le premier échangeur thermique 10 et le deuxième échangeur thermique 20 et le deuxième équipement 21.

Cette conduite de by-pass 26 est équipée d'un moyen de contrôle du débit d'air circulant dans la conduite de by-pass 26. Ce moyen de contrôle du débit d'air est par exemple une vanne 28 de régulation de débit, qui peut être de tout type. La commande de cette vanne 28 de régulation de débit d'air permet d'alimenter directement en air refroidi par le premier échangeur thermique 10 le deuxième équipement 21, sans passer par le deuxième échangeur thermique 20.

Le système de refroidissement comprend également de préférence une conduite de dérivation 16 s'étendant entre un nœud 17 agencé entre le premier échangeur thermique 10 et le deuxième échangeur thermique 20 et le premier équipement 11.

Cette conduite de dérivation 16 est équipée d'un moyen de contrôle du débit d'air circulant dans la conduite de dérivation 16 de manière à pouvoir, sur commande, alimenter en air refroidi par le premier échangeur thermique 10 le premier équipement 11. Ce moyen de contrôle du débit d'air est par exemple une vanne de régulation de débit d'air, non représenté sur les figures.

De préférence, le système comprend également une unité de commande, non représentée sur les figures à des fins de clarté, qui est configurée pour pouvoir commander les vannes de régulation de débit de la conduite de dérivation 16 et de la conduite de by-pass 26 de sorte que le système présente au moins les modes de fonctionnement suivants :
- un mode de fonctionnement, dit normal, dans lequel le premier équipement 11 et le deuxième équipement 21 sont chacun alimentés par l'air refroidi uniquement par le premier échangeur thermique 10
- un mode de fonctionnement, dit de secours, dans lequel le premier équipement 11 est alimenté en air bleed refroidi par le premier échangeur thermique 10 et le deuxième équipement 21 est alimenté en air bleed refroidi à la fois par le premier échangeur thermique 10 et par le deuxième échangeur thermique 20,
- un mode de fonctionnement, dit d'urgence, dans lequel le premier équipement 11 n'est pas alimenté en air bleed et le deuxième équipement 21 est alimenté en air bleed refroidi à la fois par le premier échangeur thermique 10 et par le deuxième échangeur thermique.

Selon un mode de réalisation, le nœud 17 et le nœud 27 formés entre le premier échangeur thermique 10 et le deuxième échangeur thermique 20 sont un même et unique nœud.

Le système d'air comprend également de préférence une vanne 41 de liaison du système d'air du moteur propulsif 6 au système d'air d'un autre moteur propulsif 7. Une telle vanne 41 permet de relier ensemble deux systèmes d'air de deux moteurs distincts de manière à ce qu'un système puisse supplanter un autre système en cas de panne de ce dernier.

Sur la figure 3, la zone M désigne la zone moteur, la zone P désigne la zone pylône du moteur et la zone B désigne la zone d'une baie d'équipements de l'aéronef. Comme indiqué précédemment, la zone moteur M peut correspondre à la nacelle du moteur propulsif et la zone pylône P peut correspondre à la zone pylône du moteur propulsif.

## Revendications

1. Système de refroidissement d'air, dit air bleed, prélevé sur un moteur (6, 7) d'un aéronef (9) pendant l'utilisation du système, pour alimenter en air à température contrôlée un premier et un deuxième équipements (11, 21), **caractérisé en ce qu'**il comprend :
- un premier échangeur thermique (10) de refroidissement air/air adapté pour être agencé dans une première zone (M) de l'aéronef, ledit premier échangeur thermique (10) comprenant un circuit primaire (12) adapté pour être alimenté par ledit air bleed, et un circuit secondaire (13), adapté pour être alimenté par une première source d'air froid (14), lesdits circuits primaire et secondaire (12, 13) étant configurés pour pouvoir assurer des échanges thermiques entre le flux d'air du circuit primaire (12) et le flux d'air du circuit secondaire (13), de manière à former un premier étage de refroidissement de l'air bleed prélevé sur le moteur (6, 7),
- un deuxième échangeur thermique (20) de refroidissement d'air adapté pour être agencé dans une deuxième zone (P) de l'aéronef, ledit deuxième échangeur thermique (20) comprenant un circuit primaire (22) adapté pour être alimenté par l'air de sortie du circuit primaire (12) dudit premier étage de refroidissement, et un circuit secondaire (23), adapté pour être alimenté par une source de fluide froid (24), indépendante de ladite première source d'air froid (14), lesdits circuits (22, 23) étant configurés pour pouvoir assurer des échanges thermiques entre le flux d'air du circuit primaire (22) et le flux de fluide du circuit secondaire (23), de manière à former un deuxième étage de refroidissement de l'air bleed prélevé sur le moteur, ledit flux d'air en sortie de ce deuxième étage de refroidissement alimentant ledit deuxième équipement (21),
- une conduite de by-pass (26) s'étendant entre un nœud (27) agencé entre le premier échangeur thermique (10) et le deuxième échangeur thermique (20) et ledit deuxième équipement (21), ladite conduite de by-pass (26) étant équipée d'un moyen de contrôle du débit d'air (28) circulant dans ladite conduite de by-pass (26) de manière à pouvoir, sur commande, alimenter directement en air refroidi par ledit premier étage de refroidissement ledit deuxième équipement (21), sans passer par ledit deuxième étage de refroidissement,
- une conduite de dérivation (16) s'étendant entre un nœud (17) agencé entre le premier échangeur thermique (10) et le deuxième échangeur thermique (20) et ledit premier équipement (11), ladite conduite (16) étant équipée d'un moyen de contrôle du débit d'air circulant dans ladite conduite de dérivation de manière à pouvoir, sur commande, alimenter en air refroidi par ledit premier étage de refroidissement ledit premier équipement (11),
- une unité de commande configurée pour pouvoir commander ledit moyen de régulation du débit d'air circulant dans ladite conduite de by-pass et ledit moyen de régulation du débit d'air circulant dans ladite conduite de dérivation de sorte que le système présente au moins les modes de fonctionnement suivants :
. un mode de fonctionnement, dit normal, dans lequel ledit premier équipement et ledit deuxième équipement sont chacun alimentés par l'air refroidi uniquement par ledit premier étage de refroidissement,
. un mode de fonctionnement, dit de secours, dans lequel ledit premier équipement est alimenté en air bleed refroidi par ledit premier étage de refroidissement et ledit deuxième équipement est alimenté en air bleed refroidi à la fois par ledit premier étage de refroidissement et par ledit deuxième étage de refroidissement,
. un mode de fonctionnement, dit d'urgence, dans lequel ledit premier équipement n'est pas alimenté en air bleed et ledit deuxième équipement est alimenté en air bleed refroidi à la fois par ledit premier étage de refroidissement et par ledit deuxième étage de refroidissement.

2. Système selon la revendication 1, **caractérisé en ce que** ledit deuxième échangeur thermique (20) est adapté pour être agencé en zone du pylône (6b, P) du moteur de l'aéronef, du ventre mou de l'aéronef ou d'une baie non pressurisée du fuselage de l'aéronef.

3. Système selon l'une des revendications 1 ou 2, **caractérisé en ce que** ladite première source d'air froid (14) est formée par un air prélevé sur un écoulement secondaire d'un moteur propulsif (6, 7), dit air fan.

4. Système selon l'une des revendications 1 à 3, **caractérisé en ce que** ladite deuxième source d'air froid (24) est formée par un air à la pression dynamique, dit air RAM, prélevé depuis une prise d'air extérieure.

5. Système selon l'une des revendications 1 à 4, **caractérisé en ce que** ledit premier échangeur thermique (10) est un échangeur cylindrique de refroidissement air/air enchâssé dans une conduite tubulaire de circulation d'air bleed adaptée pour relier ledit moteur (5, 6) et ledit deuxième échangeur thermique (20).

6. Système selon l'une des revendications 1 à 5, **caractérisé en ce qu'**au moins un échangeur (10, 20) est formé en Carbure de Silicium.

7. Système selon l'une des revendications 1 à 6, **caractérisé en ce que** ledit deuxième équipement (21) est un pack de conditionnement d'air d'un système de contrôle environnemental d'une cabine de l'aéronef.

8. Aéronef comprenant au moins un moteur propulsif (6, 7) et au moins deux équipements (11, 12) adaptés pour être alimentés en air à température contrôlée, **caractérisé en ce qu'**il comprend en outre au moins un système de refroidissement d'air, dit air bleed, prélevé sur ledit moteur (6, 7) propulsif pour alimenter en air lesdits premier et deuxième équipements (11, 12) selon l'une des revendications 1 à 7.

9. Procédé de refroidissement d'un air, dit air bleed, prélevé sur un moteur (6, 7) d'un aéronef (9) pour alimenter en air à température contrôlée un premier et un deuxième équipements (11, 21), **caractérisé en ce qu'**il comprend :
- une première étape de refroidissement de l'air bleed par un premier échangeur thermique (10) de refroidissement air/air agencé dans une première zone de l'aéronef, au moyen d'une première source d'air froid (14), formant un premier étage de refroidissement,
- une deuxième étape de refroidissement de l'air bleed en sortie du premier échangeur thermique (10) par un deuxième échangeur thermique (20) de refroidissement d'air agencé dans une deuxième zone de l'aéronef, au moyen d'une deuxième source de fluide froid (24), indépendante de ladite première source d'air froid (14), ledit flux d'air en sortie de ce deuxième échangeur thermique alimentant ledit deuxième équipement (21), formant un deuxième étage de refroidissement,
- une étape de commande d'un mode de fonctionnement choisi parmi:
. un mode de fonctionnement, dit normal, dans lequel ledit premier équipement et ledit deuxième équipement sont chacun alimentés par l'air refroidi uniquement par ledit premier étage de refroidissement,
. un mode de fonctionnement, dit de secours, dans lequel ledit premier équipement est alimenté en air bleed refroidi par ledit premier étage de refroidissement et ledit deuxième équipement est alimenté en air bleed refroidi à la fois par ledit premier étage de refroidissement et par ledit deuxième étage de refroidissement,
. un mode de fonctionnement, dit d'urgence, dans lequel ledit premier équipement n'est pas alimenté en air bleed et ledit deuxième équipement est alimenté en air bleed refroidi à la fois par ledit premier étage de refroidissement et par ledit deuxième étage de refroidissement.

## Patentansprüche

1. System zum Kühlen von Abluft, die während der Nutzung des Systems aus einem Motor (6, 7) eines Luftfahrzeugs (9) entnommen wird, um eine erste und eine zweite Ausrüstung (11, 21) mit temperaturgesteuerter Luft zu versorgen, **dadurch gekennzeichnet, dass** es Folgendes umfasst:
- einen ersten Wärmetauscher (10) zur Luft/Luft-Kühlung, der angepasst ist in einem ersten Bereich (M) des Luftfahrzeugs angeordnet zu werden, wobei der erste Wärmetauscher (10) einen Primärkreislauf (12) umfasst, der ausgelegt ist mit Abluft versorgt zu werden, und einen Sekundärkreislauf (13), der angepasst ist, mit einer ersten Kaltluftquelle (14) versorgt zu werden, wobei der Primär- und der Sekundärkreislauf (12, 13) so ausgestaltet sind, dass sie einen Wärmeaustausch zwischen dem Luftstrom des Primärkreislaufs (12) und dem Luftstrom des Sekundärkreislaufs (13) sicherstellen können, um eine erste Stufe zur Kühlung der aus dem Motor (6, 7) entnommenen Abluft zu bilden,
- einen zweiten Wärmetauscher (20) zur Luftkühlung, der angepasst ist, in einem zweiten Bereich (P) des Luftfahrzeugs angeordnet zu werden, wobei der zweite Wärmetauscher (20) einen Primärkreislauf (22) umfasst, der ausgelegt ist, mit der Austrittsluft des Primärkreislaufs (12) der ersten Kühlstufe versorgt zu werden, und einen Sekundärkreislauf (23), der ausgelegt ist, mit einer Quelle (24 ) für kaltes Fluid versorgt zu werden, wobei die Kreisläufe (22, 23) so ausgestaltet sind, dass sie einen Wärmeaustausch zwischen dem Luftstrom des Primärkreislaufs (22) und dem Fluidstrom des Sekundärkreislaufs (23) sicherstellen können, um eine zweite Kühlstufe für die aus dem Motor entnommenen Abluft zu bilden, wobei der Luftstrom am Ausgang dieser zweiten Kühlstufe die zweite Ausrüstung (21) versorgt,
- eine Bypass-Leitung (26), die sich zwischen einem Knotenpunkt (27) erstreckt, der zwischen dem ersten Wärmetauscher (10) und dem zweiten Wärmetauscher (20) und dem zweiten Gerät (21) angeordnet ist, wobei die Bypass-Leitung (26) mit einem Mittel zur Steuerung des Luftstroms (28) ausgestattet ist, der in der Bypass-Leitung (26) zirkuliert, um auf Anfrage das zweite Gerät (21) direkt mit der durch die erste Kühlstufe gekühlten Luft versorgen zu können, ohne die zweite Kühlstufe zu durchlaufen,
- eine Abzweigleitung (16), die sich zwischen einem Knotenpunkt (17) zwischen dem ersten Wärmetauscher (10) und dem zweiten Wärmetauscher (20) und der ersten Ausrüstung (11) erstreckt, wobei die Leitung (16) mit einer Einrichtung zur Steuerung des Luftstroms in der Ableitung ausgestattet ist, um auf Anforderung die erste Ausrüstung (11) mit von der ersten Kühlstufe gekühlter Luft versorgen zu können,
- eine Steuereinheit, die derart ausgestaltet ist, dass sie die Mittel zur Steuerung des in der Bypass-Leitung zirkulierenden Luftstroms und die Mittel zur Steuerung des in der Abzweigungs-Leitung zirkulierenden Luftstroms derart steuern kann, dass das System mindestens die folgenden Betriebsarten aufweist:
- eine Betriebsart Normal, in der das erste Gerät und das zweite Gerät jeweils mit nur von der ersten Kühlstufe gekühlter Abluft versorgt werden,
- eine Betriebsart Unterstützung, in der das erste Gerät mit von der ersten Kühlstufe gekühlter Luft versorgt wird und in der das zweite Gerät mit sowohl von der ersten Kühlstufe als auch von der zweiten Kühlstufe gekühlten gekühlter Abluft versorgt wird,
- eine Betriebsart Notbetrieb, in der das erste Gerät nicht mit Luft versorgt wird und in der das zweite Gerät mit sowohl von der ersten Kühlstufe als auch von der zweiten Kühlstufe gekühlter Abluft versorgt wird.

2. System nach Anspruch 1, **dadurch gekennzeichnet, dass** der zweite Wärmetauscher (20) derart angepasst ist, dass er in einem Bereich eines Triebwerkspylons (6b, P) des Luftfahrzeugs, einer Schwachstelle des Luftfahrzeugs oder einer nicht unter Druck stehenden Ausbuchtung des Rumpfes des Luftfahrzeugs angeordnet werden kann.

3. System nach einem der Ansprüche 1 oder 2, **dadurch gekennzeichnet, dass** die erste Kaltluftquelle (14) durch Luft gebildet wird, die aus einem Sekundärstrom eines Antriebsmotors (6, 7), den Luft-Schaufeln, entnommen wird.

4. System nach einem der Ansprüche 1 bis 3, **dadurch gekennzeichnet, dass** die zweite Kaltluftquelle (24) durch Luft mit dynamischem Druck, sogenannte RAM-Luft, gebildet wird, die von einem Außenluftanschluss entnommen wird.

5. System nach einem der Ansprüche 1 bis 4, **dadurch gekennzeichnet, dass** der erste Wärmetauscher (10) ein zylindrischer Luft/Luft-Kühltauscher ist, der in eine rohrförmige Abluft-Zirkulationsleitung eingebettet ist, die angepasst ist, den Motor (5, 6) und den zweiten Wärmetauscher (20) zu verbinden.

6. System nach einem der Ansprüche 1 bis 5, **dadurch gekennzeichnet, dass** mindestens ein Wärmetauscher (10, 20) aus Siliziumkarbid geformt ist.

7. System nach einem der Ansprüche 1 bis 6, **dadurch gekennzeichnet, dass** die zweite Ausrüstung (21) eine Klimatisierungsanlage eines Umgebungssteuerungs-Systems einer Flugzeugkabine ist.

8. Luftfahrzeug mit mindestens einem Antriebsmotor (6, 7) und mindestens zwei Ausrüstungen (11, 12), die angepasst sind, mit temperaturgesteuerter Luft versorgt zu werden, **dadurch gekennzeichnet, dass** es weiter mindestens ein Luftkühlsystem mit Abluft umfasst, das dem Antriebsmotor (6, 7) entnommen wird, um die erste und die zweite Ausrüstung (11, 12) nach einem der Ansprüche 1 bis 7 mit Luft zu versorgen.

9. Verfahren zum Kühlen von Abluft, die aus einem Motor (6, 7) eines Luftfahrzeugs (9) entnommen wird, um eine erste und eine zweite Ausrüstung (11, 21) mit temperaturgesteuerter Luft zu versorgen, **dadurch gekennzeichnet, dass** es Folgendes umfasst:
- einen ersten Schritt des Kühlens der Abluft durch einen ersten Luft/Luft-Kühlungswärmetauscher (10) in einem ersten Bereich des Luftfahrzeugs mit Hilfe einer ersten Kaltluftquelle (14), die eine erste Kühlstufe bildet,
- einen zweiten Schritt des Kühlens der Abluft, die aus dem ersten Wärmetauscher (10) austritt, durch einen zweiten Wärmetauscher (20) zur Kühlung der Luft in einem zweiten Bereich des Luftfahrzeugs mittels einer zweiten Quelle für kaltes Fluid (24), die von der ersten Quelle für kalte Luft (14) unabhängig ist, wobei der Luftstrom, der aus diesem zweiten Wärmetauscher austritt, die zweite Ausrüstung (21) speist, die eine zweite Kühlstufe bildet,
- einen Schritt des Steuerns einer Betriebsart, die ausgewählt ist unter:
- einer Betriebsart Normal, in der das erste Gerät und das zweite Gerät jeweils mit Luft versorgt werden, die nur von der ersten Kühlstufe gekühlt wird,
- einer Betriebsart Unterstützung, in der das erste Gerät mit Frischluft versorgt wird, die von der ersten Kühlstufe gekühlt wird, und das zweite Gerät mit Frischluft versorgt wird, die sowohl von der ersten Kühlstufe als auch von der zweiten Kühlstufe gekühlt wird,
- einer Betriebsart Notbetrieb, in der das erste Gerät nicht mit Frischluft versorgt wird und das zweite Gerät mit Frischluft versorgt wird, die sowohl von der ersten Kühlstufe als auch von der zweiten Kühlstufe gekühlt wird.

## Claims

1. Air cooling system, called air bleed, taken from an engine (6, 7) of an aircraft (9) to supply air at controlled temperature to first and second equipment (11, 21), **characterized in that** it comprises:
- a first air/air cooling heat exchanger (10) adapted to be arranged in a first zone (M) of the aircraft, said first heat exchanger (10) comprising a primary circuit (12) adapted to be supplied by said air bleed, and a secondary circuit (13), adapted to be supplied by a first source of cold air (14), said primary and secondary circuits (12, 13) being configured to be able to ensure heat exchanges between the air flow of the primary circuit (12) and the air flow of the secondary circuit (13), so as to form a first stage for cooling the bleed air taken from the engine (6, 7),
- a second heat exchanger (20) for air cooling adapted to be arranged in a second zone (P) of the aircraft, said second heat exchanger (20) comprising a primary circuit (22) adapted to be supplied by the outlet air from the primary circuit (12) of said first cooling stage, and a secondary circuit (23), adapted to be supplied by a source of cold fluid (24), independent of said first source of cold air (14), said circuits (22, 23) being configured to be able to ensure heat exchanges between the air flow of the primary circuit (22) and the fluid flow of the secondary circuit (23), so as to form a second cooling stage of the bleed air taken from the engine, said air flow at the outlet of this second cooling stage supplying said second equipment (21),
- a bypass pipe (26) extending between a node (27) arranged between the first heat exchanger (10) and the second heat exchanger (20) and said second equipment (21), said bypass pipe (26) being equipped with a means of controlling the flow of air (28) circulating in the said by-pass duct (26) so as to be able, on command, to directly supply air cooled by the said first cooling stage to the said second equipment (21), without going through said second cooling stage,
- a bypass pipe (16) extending between a node (17) arranged between the first heat exchanger (10) and the second heat exchanger (20) and said first equipment (11), said pipe (16) being equipped with means for controlling the flow of air circulating in said bypass duct so as to be able, on command, to supply air cooled by said first cooling stage to said first piece of equipment (11),
- a control unit configured to be able to control said means for regulating the flow of air circulating in said bypass duct and said means for regulating the flow of air circulating in said bypass duct so that the system has at least the following operating modes:
• an operating mode, called normal, in which said first equipment and said second equipment are each supplied with air cooled only by said first cooling stage,
• an operating mode, called back-up, in which said first equipment is supplied with bleed air cooled by said first cooling stage and said second equipment is supplied with bleed air cooled both by said first cooling stage and by said second stage cooling,
• an operating mode, called emergency, in which said first piece of equipment is not supplied with bleed air and said second piece of equipment is supplied with bleed air cooled both by said first cooling stage and by said second cooling stage.

2. System according to Claim 1, **characterized in that** the said second heat exchanger (20) is adapted to be arranged in the zone of the pylon (6b, P) of the engine of the aircraft, of the soft belly of the aircraft or of a bay unpressurized from the fuselage of the aircraft.

3. System according to one of Claims 1 or 2, **characterized in that** the said first source of cold air (14) is formed by air taken from a secondary flow of a propulsion engine (6, 7), called air fan.

4. System according to one of Claims 1 to 3, **characterized in that** the said second source of cold air (24) is formed by air at dynamic pressure, called RAM air, taken from an outside air intake.

5. System according to one of Claims 1 to 4, **characterized in that** the said first heat exchanger (10) is a cylindrical air/air cooling exchanger embedded in a tubular bleed air circulation pipe adapted to connect the said engine (5, 6) and said second heat exchanger (20).

6. System according to one of Claims 1 to 5, **characterized in that** at least one exchanger (10, 20) is formed from silicon carbide.

7. System according to one of Claims 1 to 6, **characterized in that** the said second piece of equipment (21) is an air conditioning pack of an environmental control system for an aircraft cabin.

8. Aircraft comprising at least one propulsion engine (6, 7) and at least two items of equipment (11, 12) adapted to be supplied with air at controlled temperature, **characterized in that** it further comprises at least one air cooling system, called air bleed, taken from said propulsion engine (6, 7) to supply air to said first and second equipment (11, 12) according to one of claims 1 to 7.

9. Method of cooling air, called air bleed, taken from an engine (6, 7) of an aircraft (9) to supply air at controlled temperature to first and second equipment (11, 21), **characterized in that** it includes:
- a first step of cooling the air bleed by a first air cooling heat exchanger (10) arranged in a first zone of the aircraft, by means of a first source of cold air (14), forming a first cooling stage,
- a second stage of cooling the air bleed at the outlet of the first heat exchanger (10) by a second air cooling heat exchanger (20) arranged in a second zone of the aircraft, by means of a second source of cold fluid (24), independent of said first cold air source (14), said air flow at the outlet of this second heat exchanger supplying said second equipment (21), forming a second cooling stage,
- a step of controlling an operating mode chosen from:
• an operating mode, called normal, in which said first equipment and said second equipment are each supplied with air cooled only by said first cooling stage,
• an operating mode, called back-up, in which said first piece of equipment is supplied with bleed air cooled by said first cooling stage and said second piece of equipment is supplied with bleed air cooled both by said first cooling stage and by said second stage cooling,
• an operating mode, called emergency, in which said first piece of equipment is not supplied with bleed air and said second piece of equipment is supplied with bleed air cooled both by said first cooling stage and by said second cooling stage.
